# EUROPEAN PATENT SPECIFICATION

(11) **EP 3 165 786 B1**
(45) Date of publication and mention of the grant of the patent: **23.08.2023**
(21) Application number: 15192676.3
(22) Date of filing: 03.11.2015
(51) Int. Cl.: F16F 9/04, F16F 9/05

(54) **AIR SPRING PISTON**
LUFTFEDERKOLBEN
PISTON À RESSORT PNEUMATIQUE

(43) Date of publication of application: 10.05.2017
(73) Proprietor: ContiTech Luftfedersysteme GmbH, 30165 Hannover (DE)
(72) Inventor: Kosir, Matej, SI-4290 Trzic (SI); Polajnar, Cene, SI-4224 Gorenja vas (SI); Rebernik, Jure, 4208 SI-Sencur (SI); Stojko, Branimir, SI-4208 Sencur (SI)
(74) Representative: Continental Corporation

(56) References cited:
- EP-A2- 2 775 162
- WO-A2-2011/034918
- DE-A1- 4 230 249

## Description

### Background of the Invention

Pneumatic springs, commonly referred to as air springs, have been used in conjunction with motor vehicles for a number of years to provide cushioning between movable parts of the vehicle to absorb shock loads impressed on the vehicle axles by the wheels striking an object in the road, such as a bump, depression, or other obstruction. One basic design of pneumatic springs is referred to as a rolling lobe air spring, examples of which are illustrated in United States Patent 3,043,582, United States Patent 5,535,994, and United States Patent 6,460,836.

Rolling lobe air springs typically include a flexible elastomeric reinforced sleeve that extends between a pair of end members. The sleeve is attached to the end members to form a pressurized chamber there between and the end members mount the air spring on spaced components or parts of the vehicle or other equipment for which shock absorption is desired. The internal pressurized gas, usually air, absorbs most of the motion impressed upon one of the spaced end members due to road shocks experienced by the vehicle. The end members move inwards and towards each other when the spring is in jounce and away and outwards from each other when the spring is in rebound. One of the end members is referred to as a retainer plate and sealingly couples to the sleeve. The retainer plate is used to mount the air spring to one part of the vehicle, such as the body of a vehicle. The other end member typically includes an air spring piston. The piston provides both a means for mounting the air spring to another part of the vehicle, such as the axel of the vehicle axle, and a surface for the rolling lobe sleeve to travel upon when the air spring is subjected to compressive forces.

Air springs can be designed for center-mounting or in the alternative they can be designed for off-set mounting. For instance, center-mounted air springs are configured to mount to the vehicle such that the center point of the mounting is along the centerline of the air spring. The piston in center-mounted air springs has typically been formed from metal so as to withstand the forces acting thereon during jouncing. More recently, however, pistons for center-mounted air springs have been formed from hard thermoplastic materials. Plastic pistons are thought to provide certain advantages over metal pistons, including improved corrosion resistance, lower cost, and lower weight.

In some applications, it may be desirable to have off-set mounting at one or both of the end members of the air spring. Off-set mounting provides coupling to the vehicle such that the center point of the mounting is spaced from the centerline of the air spring. The off-set mounting subjects the air spring to altered and potentially increased loading, which must be accounted for in the overall design of the air spring. Accordingly, the piston for off-set mounted air springs is typically formed from metal so as to accommodate the increased loading.

In a manner analogous to center-mount air springs, recent attempts have been made to form the piston of off-set mounted air springs from plastics, and thus gain the benefits associated therewith. United States Patent Publication No. 2009/0200717 discloses an air spring design wherein substantially the entire piston can be made of a plastic material. United States Patent Publication No. 2009/0200717 more specifically reveals an air spring piston, comprising: an outer wall having a first end and a second end and defining an inner cavity having a centerline; and a support structure disposed in the inner cavity for providing structural support to the piston, the support structure including a plurality of radiallyextending ribs projecting from the outer wall, and at least one strut having a first end coupled to the outer wall at a first location and a second end coupled to the outer wall at a second location spaced from the first location such that the at least one strut does not intersect the centerline of the inner cavity. Furthermore, the document WO2011034918A2 is disclosing an air spring comprising all the features of the preamble of claim 1.

In any case, in is always advantageous to simplify air spring designs, to eliminate unneeded component parts, and to reduce cost. In most applications involving transportation vehicles it is also beneficial to reduce the weight of the air spring as much as possible without compromising performance, durability, and service life.

### Summary of the Invention

The present invention discloses an air spring design wherein the second retainer plate utilized in conventional designs is eliminated. This accomplishes the objective of reducing the manufacturing cost of the air spring as well as its overall weight. These objectives can be accomplished without compromising the performance, durability, or service life of the air spring.

The present invention more specifically discloses an air spring comprising all the features of claim 1.

### Brief Description of the Drawings

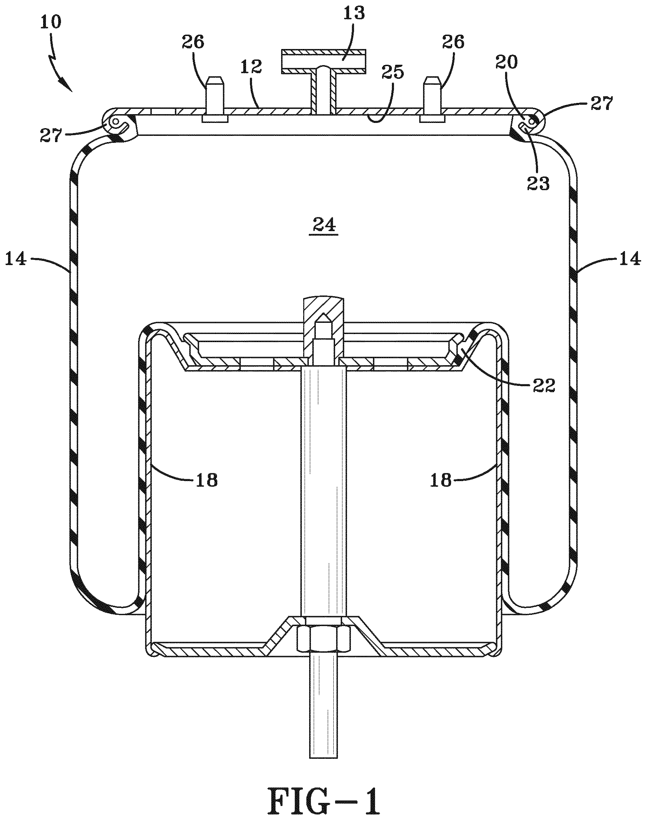

Figure 1 is an illustration showing a conventional air spring wherein the elastomeric member is attached onto the piston using a standard means known to those skilled in the art.

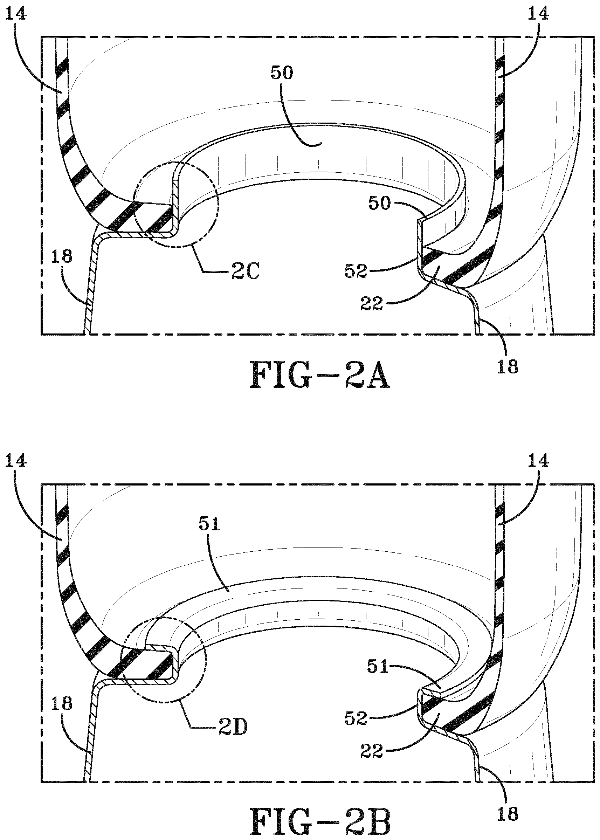

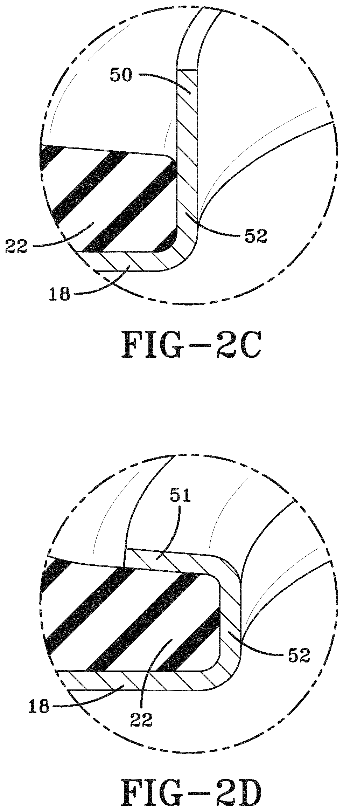

Figure 2 is an illustration showing a non-claimed air spring wherein the crimp ring is in a non-crimped position (shown on the left) and wherein it is crimped onto the elastomeric sleeve (shown on the right).

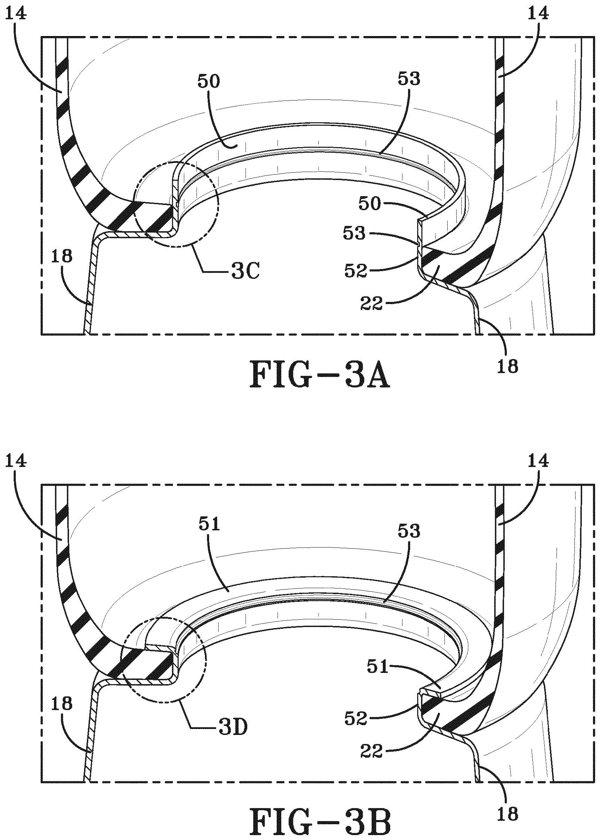

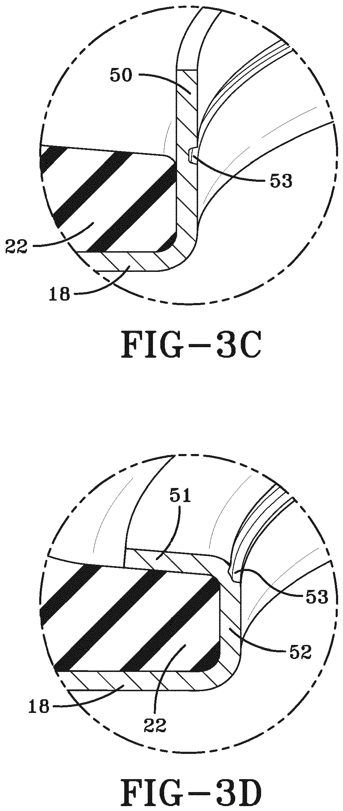

Figure 3 is an illustration showing a non-claimed air spring wherein the crimp ring is in a non-crimped position (shown on the left) and wherein it is crimped onto the elastomeric sleeve (shown on the right). In the embodiment of the invention illustrated in Figure 3, the crimp ring includes a horizontal groove to facilitated crimping.

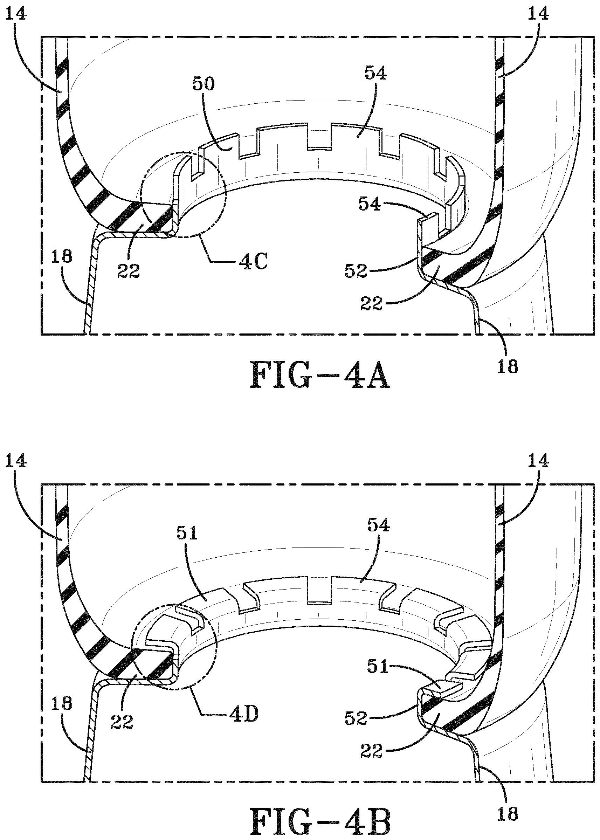

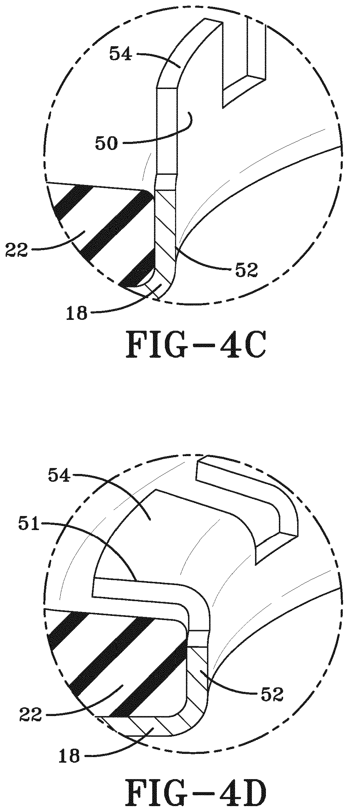

Figure 4 is an illustration showing a non-claimed air spring wherein the crimp ring includes crimp tabs. It is illustrated in a non-crimped position (shown on the left) and wherein it is crimped onto the elastomeric sleeve (shown on the right).

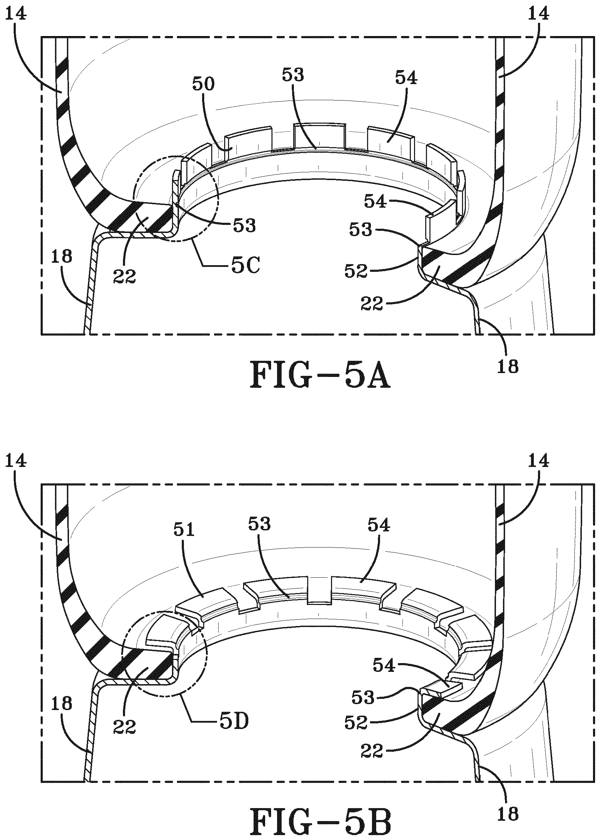

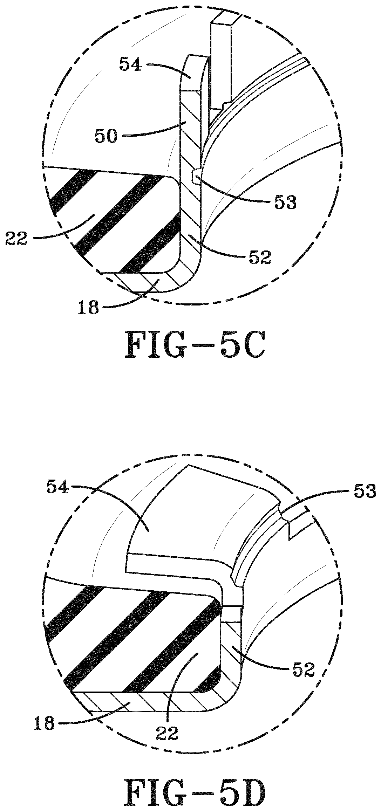

Figure 5 is an illustration showing a non-claimed air spring wherein the crimp ring includes crimp tabs. It is illustrated in a non-crimped position (shown on the left) and wherein it is crimped onto the elastomeric sleeve (shown on the right). In the embodiment of the invention illustrated in Figure 5 the crimp ring includes a horizontal groove to facilitated crimping the crimp taps over the elastomeric sleeve.

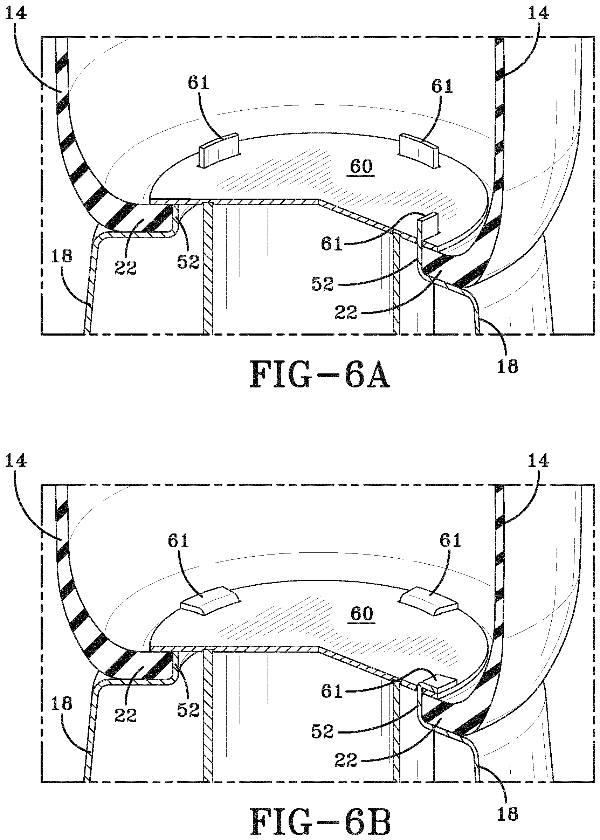

Figure 6 is an illustration showing a non-claimed air spring wherein the crimp ring includes crimp tabs which are crimped over a crimp plate which affixes the elastomeric sleeve to the piston. It is illustrated in a non-crimped position (shown on the left) and wherein it is crimped onto the elastomeric sleeve (shown on the right).

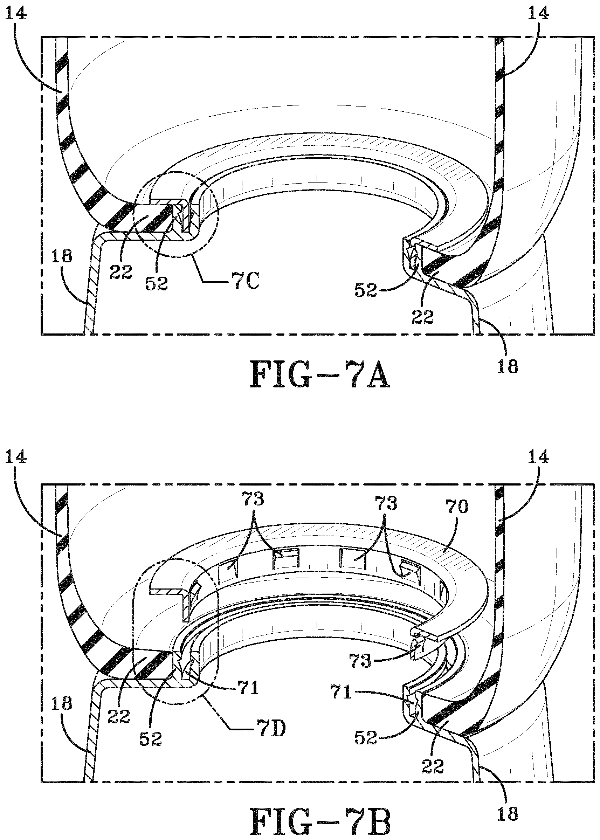

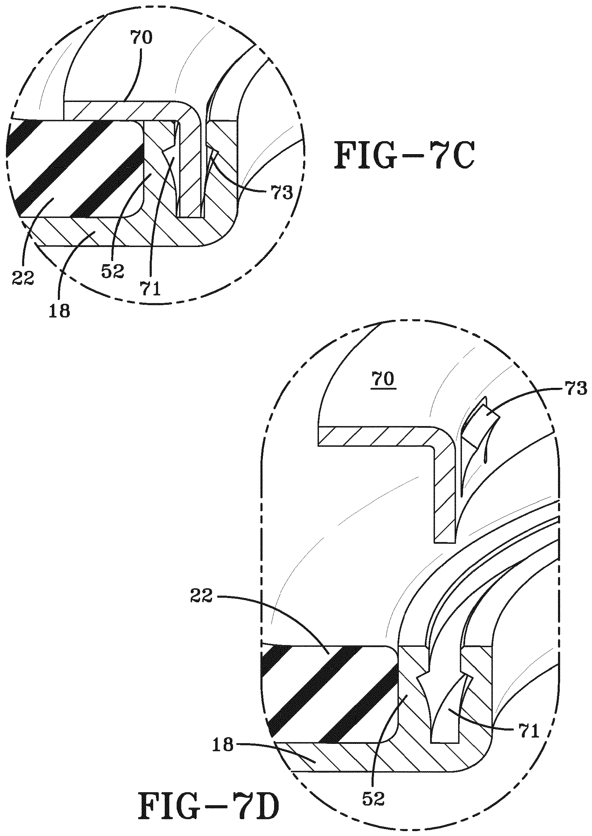

Figure 7 is an illustration showing an air spring of this invention wherein the piston is comprised of a plastic or a metal, such as steel or aluminum, with a clamp ring (an insert ring) which can also be comprised of a plastic or a metal, such as a steel insert. It is illustrated in a non-locked position (shown on the left) and in a locked position wherein the elastomeric sleeve is firmly held in contact with the piston by the clamp ring in an airtight manner (shown on the right).

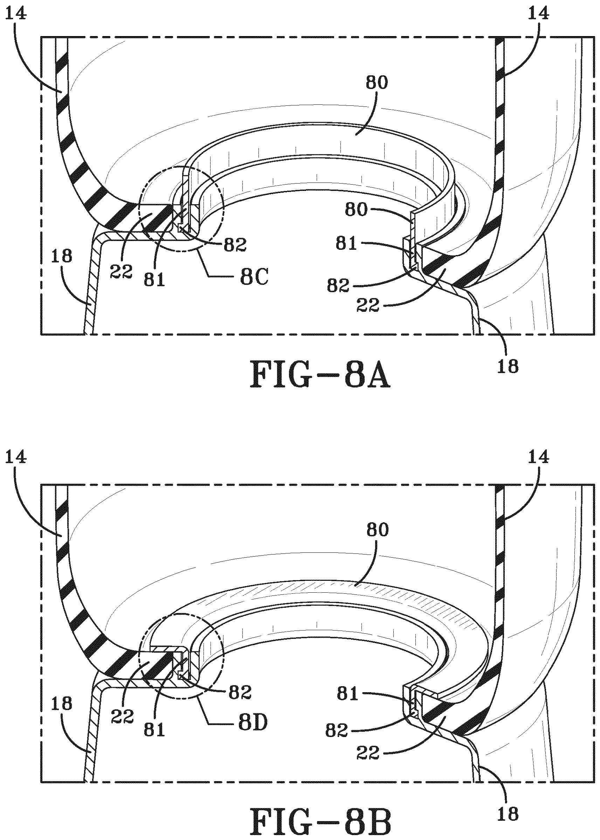

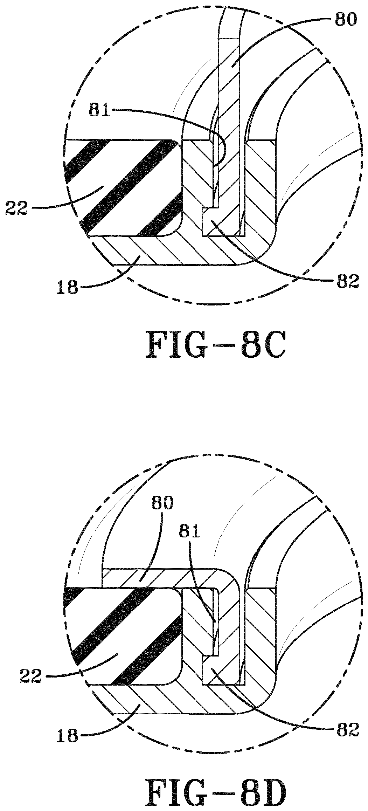

Figure 8 is an illustration showing a non-claimed air spring wherein the piston is comprised of a plastic material with a "molded-in" metal crimp. It is illustrated in a non-crimped position (shown on the left) and wherein it is crimped onto the elastomeric sleeve (shown on the right). In an alternative embodiment of this design the metal crimp can include a plurality of tabs or fingers which can be bent over the elastomeric sleeve to crimp it securely onto the piston.

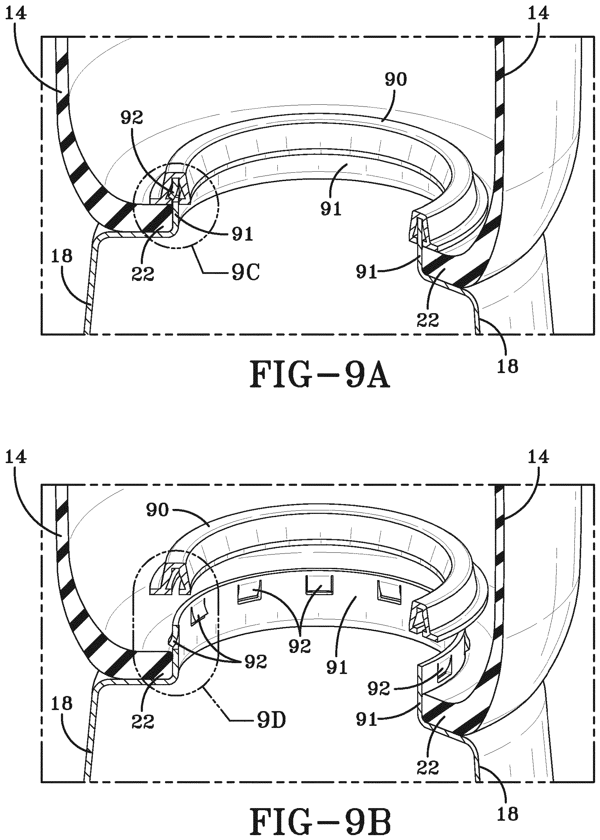

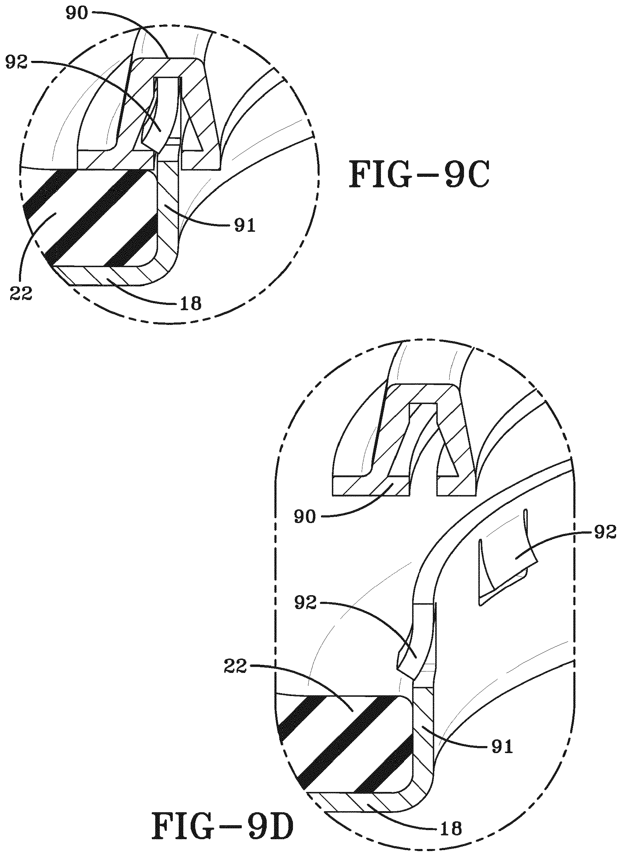

Figure 9 is an illustration showing an air spring of this invention wherein the elastomeric sleeve is crimped onto the piston with a clamping insert. It is illustrated in a non-crimped position (shown on the left) and wherein it is crimped onto the elastomeric sleeve (shown on the right).

### Detailed Description of the Invention

Figure 1 illustrates a conventional rolling lobe air spring **10**. As is conventional with standard designs this air spring **10** includes a retainer plate **12**, an elastomeric sleeve **14**, and a piston **18**. The elastomeric sleeve **14** includes a first end **20** which is sealingly engaged with the first retainer plate **12** and a second end **22** sealing engaged with the piston **18** to form a pressurized chamber **24** within air spring **10**. The retainer plate **12** is adapted to be coupled to a first component or part of a vehicle and the piston **18** is adapted to be coupled to a second component of the vehicle. The pressurized chamber **24** is filled with a gas, such as air, nitrogen or helium, and is capable of absorbing loads applied to the vehicle.

The retainer plate **12** may include interlocking structure **23** to facilitate coupling the retainer plate **12** to the first end **20** of sleeve **14** in a sealed (air tight) manner. By way of example, in standard designs the retainer plate **12** may include a base surface **25** and a downwardly turned U-shaped flange **27** along a periphery thereof that receives the first end **20** of elastomeric sleeve **14** therein. In such conventional designs the retainer plate **12** may further include at least one fastener **26** for coupling the retainer plate **12** to the first component of the vehicle. The fastener may include threaded studs or other such fasteners which are capable of securely fastening the first retainer plate **12** to the first component of the vehicle. The retainer plate **12** may further include a port **13** for introducing fluid into the pressurized chamber **24**. As is conventional, the retainer plate **12** may be formed of metal or can optionally be comprised of a polymeric material, such as a glass or fiber filled polyamide (nylon) or a glass or fiber filled polyolefin, such as polypropylene.

The elastomeric sleeve **14** bounds at least a portion of the pressurized chamber **24** and allows compression and expansion thereof during loading of the air spring **10**. The sleeve **14** may include at least one reinforcement layer for providing some strength to the elastomeric sleeve **14**, but which still allows for the sleeve **14** to flex during use of the air spring **10**. The reinforcement layer may be formed of cords or a fabric which is made of a conventional polyester, nylon, aramid, steel, or other suitable materials known to those having ordinary skill in the art. The chosen reinforcement material is application specific and determined by the forces to which the air spring **10** will be subjected during its service life. Moreover, the length of sleeve **14** varies depending on the specific application in which it will be employed.

As previously noted, the first end **20** of sleeve **14** is coupled in a manner by which it is sealed in an air point manner to the retainer plate **12**. To this end, the first end **20** of elastomeric sleeve **14** may include an internal bead which is captivated within the flange of retainer plate **12**, to strengthen the attachment between the elastomeric sleeve **14** and the retainer plate **12**. The bead may be formed from steel cable wires or other conventional air spring bead construction materials. Although a flange/bead coupling is described herein, the elastomeric sleeve **14** may be coupled to the retainer plate **12** by other known conventional techniques, such as snapping the sleeve **14** onto the first retainer plate **12** or the use of a bead retaining ring located outward of the sleeve **14**, as is illustrated in United States Patent 5,535,994.

As illustrated in Figure 1, the second end **22** of the elastomeric sleeve **14** is snapped onto the piston **18** in a sealed (air tight) manner. As previously noted, the piston **18** is configured to mount to a second component of the vehicle and provide a surface on which elastomeric sleeve **14** rolls during compression of the air spring **10**. As illustrated in Figure 1, an outer surface **43** of outer wall **40** provides the rolling surface for the elastomeric sleeve **14** during compression of the air spring **10.** The piston **18** may be generally cylindrically shaped having an outer wall **40** that defines the inner cavity 24 of the air spring **10**. Although the piston **18** is illustrated as being cylindrical, the invention is not limited to cylindrical designs and may be of another shape. For instance, square, rectangular, oval, and polygonal designs are contemplated to be within the scope of this invention.

This invention relates to various air spring designs which facilitate crimping or clamping the elastomeric sleeve onto the piston in relatively simple and cost effective manner. Some of the various embodiments are illustrated in the designs illustrated in Figures 2-9.

Figure 2A and Figure 2C illustrates an air spring wherein the crimp ring **50** is in a non-crimped position and wherein the crimp ring **51** is crimped onto the elastomeric sleeve as shown in Figure 2B and Figure 2D. In this embodiment the crimp ring **50** and **51** extends from the bead seal **52** of the piston **18** and can be crimped over the second end **22** of the elastomeric sleeve **14** to securely attach the elastomeric sleeve **14** to the piston **18** in an air tight manner.

Figure 3 illustrates an air spring wherein crimp ring **50** is in a non-crimped position (as shown in Figure 3A and Figure 3C) and wherein the crimp ring **51** is crimped onto the elastomeric sleeve (as shown in Figure 3B and Figure 3D). This embodiment is similar to the embodiment illustrated in Figure 2 except for the fact that a crimp groove **53** is situated between the crimp ring **50**, **51** and the bead seal **52** to facilitate crimping the crimp ring over the second end of the elastomeric sleeve **14**. The crimp groove **53** will typically extend into the area between the crimp ring and the bead seal to a depth which is between about 10% to about 40% of the thickness of the crimp ring **50**, **51** and the bead seal **52**. In this embodiment the crimp ring **50** and **51** again extends from the bead seal **52** of the piston **18** and can be crimped over the second end **22** of the elastomeric sleeve **14** to securely attach the elastomeric sleeve **14** to the piston **18**. The inclusion of the crimp groove **53** significantly reduces the force required to crimp the crimp ring **50** over the second end **22** of the elastomeric sleeve **14** , but does not significantly reduce the strength of the attachment of the piston **18** to the elastomeric sleeve **14**.

Figure 4A and Figure 4C illustrates an air spring wherein crimp ring **50** is in a non-crimped position and Figure 4B and Figure 4D show the crimp ring **51** crimped onto the elastomeric sleeve. In this embodiment the crimp ring **50** and **51** is comprised of a plurality of crimp teeth **54** which extend from the bead seal **52** of the piston **18** and which can be crimped over the second end **22** of the elastomeric sleeve **14** to securely attach the elastomeric sleeve **14** to the piston **18**. This design wherein the crimp ring **50**, **51** is comprised of a series of crimp teeth **54** significantly reduces the force required to crimp the crimp ring **50** over the second end **22** of the elastomeric sleeve **14** , but does not significantly reduce the strength of the attachment of the piston **18** to the elastomeric sleeve **14**.

Figure 5A and Figure 5C illustrates an air spring wherein crimp ring **50** is in a non-crimped position and Figure 5B and Figure 5C illustrate the crimp ring **51** crimped onto the elastomeric sleeve. In this embodiment the crimp ring (or cogged ring) **50** and **51** is comprised of a plurality of crimp teeth **54** which extend from the bead seal **52** of the piston **18** and which can be crimped over the second end **22** of the elastomeric sleeve **14** to securely attach the elastomeric sleeve **14** to the piston **18**. In this design a series of crimp grooves **53** are situated between the crimp ring teeth **54** and the bead seal **52** to facilitate crimping the crimp ring teeth **54** over the second end of the elastomeric sleeve **14**. This design further reduces the force required to crimp the crimp ring teeth **54** over the second end **22** of the elastomeric sleeve **14** , but does not significantly reduce the strength of the attachment of the piston **18** to the elastomeric sleeve **14**.

Figure 6A and Figure 6C illustrates an air spring wherein a clamp ring **60** is in a non-crimped position and Figure 6B and Figure 6D show the clamp ring **60** clamped onto the elastomeric sleeve. In this embodiment the clamp ring **60** is clamped securely into the second end of the elastomeric sleeve **14** with a plurality of clamp ring engagement teeth **61** which extend from the bead seal **52** of the piston **18**. As can be seen the clamp ring engagement teeth **61** are crimped (bent) over the clamp ring **60** to securely lock the elastomeric sleeve **14** to the piston **18** of the air spring.

Figure 7B and Figure 7D illustrates an air spring of this invention wherein a clamp ring **70** is in a non-clamped position and Figure 7A and Figure 7C show the clamp ring **70** clamped onto the elastomeric sleeve. In this embodiment of the invention the clamp ring **70** is clamped securely into the second end of the elastomeric sleeve **14** by snapping it into a clamp ring engagement slot **71** which extend from the bead seal **52** of the piston **18**. As can be seen, locking taps **73** on the clamp ring are designed to snap into the clamp ring engagement slots **71** to securely lock the elastomeric sleeve **14** to the piston **18** of the air spring. In one embodiment of this design the piston **18** can be comprised of a plastic material with the clamp ring **70** being comprised of a metal, such as carbon steel.

Figure 8A and 8C illustrates an air spring wherein a crimp ring **80** is in a non-crimped position and Figure 8B and Figure 8D show the crimp ring **80** crimped onto the elastomeric sleeve. In this embodiment the crimp ring **80** is molded into a crimp ring engagement slot **81** and crimped over the second end of the elastomeric sleeve **14** which extend from the bead seal **52** of the piston **18.** As can be seen, the crimp ring **80** is molded into crimp ring engagement slot **81** and can then be crimped over the elastomeric sleeve **14** to the piston **18** of the air spring to securely attach the piston **18** to the elastomeric sleeve **14**. In one embodiment of this design the piston **18** can be comprised of a plastic material with the clamp ring **70** being comprised of a metal, such as carbon steel.

Figure 9A and Figure 9C illustrates an air spring of this invention wherein a clamp ring **90** is in a non-clamped position and Figure 9B and Figure 9C illustrate the clamp ring **90** clamped onto the elastomeric sleeve. In this embodiment of the invention the clamp ring **90** is snapped onto a clamp ring engagement ring **91** and is held securely in position over the second end of the elastomeric sleeve **14** which extend from the bead seal **52** of the piston **18.** As can be seen, the clamp ring **90** is designed to snap onto the clamp ring engagement ring **91** and to securely attach the piston **18** to the elastomeric sleeve **14**. In this embodiment of the invention the clamp ring **90** snaps over a plurality of snap taps **92** which lock the clamp ring **90** in place over the second end **22** of the elastomeric sleeve **14.**

While certain representative embodiments and details have been shown for the purpose of illustrating the subject invention, it will be apparent to those skilled in this art that various changes and modifications can be made therein without departing from the scope of the subject invention as defined in the appended claims.

## Claims

1. An air spring (10), comprising a retainer plate (12), a piston (18) made of plastic material, and an elastomeric sleeve (14), wherein the elastomeric sleeve (14) is sealingly engaged with the first retainer plate (12) and the piston (18) to define a pressurizable chamber (24), wherein the piston (18) has a wall (40) which provide a surface (43) on which the elastomeric sleeve (14) rolls during compression, wherein the piston (18) has a bead seal (52) which extends from the piston wall (40) toward the center of the air spring (10) to provide a surface onto which the elastomeric sleeve (14) is crimped with a clamp ring (70, 90) which extends from the bead seal (52), wherein the clamp ring (70, 80, 90) is crimped over the elastomeric sleeve (14) to squeeze the elastomeric sleeve (14) between the clamp ring (70, 90) and the bead seal (52) and **characterised in that** the clamp ring (70, 90) is snapped into a clamp ring engagement ring (91) or clamp ring engagement slot (71) and is held securely in position over the second end (22) of a elastomeric sleeve (14) which extend from the bead seal (52) of the piston (18).

2. The air spring (10) as specified in claim 1 wherein the clamp ring (90) is crimped securely into the elastomeric sleeve (14) snapping over a plurality of clamp ring engagement snap tabs which extend from the bead seal (52) of the piston (18).

3. The air spring (10) as specified in claim 1 wherein the clamp ring (70) is clamped onto the elastomeric sleeve (14) by snapping it into a clamp ring engagement slot (71) which extend from the bead seal (52) of the piston (18).

## Patentansprüche

1. Luftfeder (10), aufweisend eine Halteplatte (12), einen Kolben (18) aus Kunststoffmaterial und eine Elastomerhülse (14), wobei die Elastomerhülse (14) abdichtend mit der ersten Halteplatte (12) und dem Kolben (18) in Eingriff ist, um eine druckbeaufschlagbare Kammer (24) zu definieren, wobei der Kolben (18) eine Wand (40) aufweist, die eine Fläche (43) bereitstellt, auf der die Elastomerhülse (14) während eines Komprimierens rollt, wobei der Kolben (18) eine Wulstdichtung (52) aufweist, die sich von der Kolbenwand (40) hin zur Mitte der Luftfeder (10) erstreckt, um eine Fläche bereitzustellen, auf die die Elastomerhülse (14) mit einem Klemmring (70, 90) verpresst ist, der sich von der Wulstdichtung (52) erstreckt, wobei der Klemmring (70, 80, 90) über der Elastomerhülse (14) verpresst ist, um die Elastomerhülse (14) zwischen dem Klemmring (70, 90) und der Wulstdichtung (52) einzuklemmen, und **dadurch gekennzeichnet, dass** der Klemmring (70, 90) in einen Klemmringeingriffsring (91) oder eine Klemmringeingriffsnut (71) eingerastet ist und über dem zweiten Ende (22) einer Elastomerhülse (14) sicher in Position gehalten ist, die sich von der Wulstdichtung (52) des Kolbens (18) erstreckt.

2. Luftfeder (10) nach Anspruch 1, wobei der Klemmring (90) sicher in die Elastomerhülse (14) verpresst ist, wobei er über einer Mehrzahl von Klemmringeingriffseinrastlaschen eingerastet ist, die sich von der Wulstdichtung (52) des Kolbens (18) erstrecken.

3. Luftfeder (10) nach Anspruch 1, wobei der Klemmring (70) auf die Elastomerhülse (14) durch Einrasten davon in eine Klemmringeingriffsnut (71) geklemmt ist, die sich von der Wulstdichtung (52) des Kolbens (18) erstreckt.

## Revendications

1. Ressort pneumatique (10) comprenant une plaque de retenue (12), un piston (18) en matière plastique et un manchon élastomère (14), le manchon élastomère (14) étant mis en prise de manière étanche avec la première plaque de retenue (12) et le piston (18) pour définir une chambre pouvant être mise sous pression (24), le piston (18) ayant une paroi (40) qui fournit une surface (43) sur laquelle le manchon élastomère (14) roule pendant la compression, le piston (18) ayant un joint d'étanchéité à bourrelet (52) qui s'étend depuis la paroi du piston (40) vers le centre du ressort pneumatique (10) pour fournir une surface sur laquelle le manchon élastomère (14) est serti avec une bague de serrage (70, 90) qui s'étend depuis le joint d'étanchéité à bourrelet (52), la bague de serrage (70, 80, 90) étant sertie sur le manchon élastomère (14) pour comprimer le manchon élastomère (14) entre la bague de serrage (70, 90) et le joint d'étanchéité à bourrelet (52) et **caractérisé en ce que** la bague de serrage (70, 90) est enclenchée dans une bague de mise en prise de la bague de serrage (91) ou dans une fente de mise en prise de la bague de serrage (71) et est maintenue solidement en position sur la seconde extrémité (22) d'un manchon élastomère (14) qui s'étend depuis le joint d'étanchéité à bourrelet (52) du piston (18).

2. Ressort pneumatique (10) selon la revendication 1, la bague de serrage (90) étant sertie solidement dans le manchon élastomère (14) en s'enclenchant sur une pluralité de languettes d'enclenchement de la bague de serrage qui s'étendent depuis le joint d'étanchéité à bourrelet (52) du piston (18).

3. Ressort pneumatique (10) selon la revendication 1, la bague de serrage (70) étant serrée sur le manchon élastomère (14) en l'enclenchant dans une fente de mise en prise de la bague de serrage (71) qui s'étend depuis le joint d'étanchéité à bourrelet (52) du piston (18).
